# EUROPEAN PATENT APPLICATION

(11) **EP 4 227 584 A1**
(43) Date of publication of application: **16.08.2023**
(21) Application number: 22472002.9
(22) Date of filing: 11.02.2022
(51) Int. Cl.: F24D 19/00, F24H 1/12, F24H 9/02, F24H 1/18, B29C 44/12, B29C 44/34

(54) **PROTECTIVE CASING FOR DEVICE AND WATER HEATER INCLUDING SUCH PROTECTIVE CASING**

(71) Applicant: Tesy Ood, 9701 Shumen (BG)
(72) Inventor: Kyurkchiev, Zhechko Angelov, 1166 Sofia (BG)
(74) Representative: Benatov, Samuil Gabriel

(57) **Abstract**

The protective casing for device according to the invention is used in production of water heaters and comprises a housing with a cavity formed inside it for accommodating the device (2), which housing has on one of its sides an opening surrounded by a continuous peripheral board (3), which extends away from a wall (4) of the housing located around the opening. The peripheral board (3) has a mounting side on which double-sided adhesive tape (5) is at least partially located. Alternating ribs (6) and grooves (7), located parallel to the edge of the housing opening, are formed in the areas of the mounting side of the peripheral board (3), where there is no double-sided adhesive tape (5).

## Description

The protective casing for device is applicable in water heating systems, for example in water heaters for storage and heating of water for industrial and household purposes, and serves as a protective element of a component that is mounted to a water heater.

### Background of the invention

A protective casing is known for covering devices that are mounted to a water heater, wherein the casing comprises a housing with a cavity formed inside it for accommodating a device. The housing has an opening on one of its sides surrounded by a continuous peripheral board, which extends away from the sides of the housing wall located around the opening. The peripheral board is smooth and rests on the inner surface of the water heater jacket, and the protective casing itself is attached by invasive fasteners to the jacket. The fasteners are mounted to bushings of the protective casing. This solution does not provide effective protection for the device, which is placed in the casing, when assembling the water heater, when thermal insulation material is placed between the water tank and the jacket. The thermal insulation material, which is polyurethane foam, is injected into the cavity between the water tank and the jacket, after which it begins to swell in order to fill the space between the water tank and the jacket. In the process of swelling, the polyurethane foam often passes between the smooth peripheral board of the casing and the jacket, which foam subsequently reaches the device placed in the casing. This leads to defects in the device, and therefore wastage or need for repair.

### Summary of the invention

It is an object of the invention to provide a protective casing for a device which is mounted on a water heating system, for example a water heater, with improved impermeability to various materials, for example polyurethane foam.

This object is achieved by creating a protective casing for a device, comprising a housing, with a cavity formed inside it for accommodating the device, which housing has on one of its sides an opening surrounded by a peripheral board, which extends away from a wall of the housing located around the opening. The peripheral board has a mounting side on which a double-sided adhesive tape is at least partially located.

In a preferred embodiment of the invention, the surface of the mounting side of the peripheral board is smooth.

It is possible to place double-sided adhesive tape on the entire surface of the mounting side.

It is also possible, in the areas of the mounting side of the peripheral board, where there is no double-sided adhesive tape, i.e. double-sided adhesive tape is missing in these areas, to have alternating ribs and grooves, located parallel to the edge of the housing opening.

In one embodiment of the invention, the peripheral board in plan is in the form of a simple polygon, with the alternating ribs and grooves located in the corner sections, wherein in the straight sections between the corner sections of the peripheral board is located the double-sided adhesive tape.

In one embodiment of the invention, the peripheral board in plan is in the form of a convex quadrangle with rounded corners, wherein the sections with alternating ribs and grooves are located in the rounded corner sections of the peripheral board and the double-sided adhesive tapes are located in the straight sections between the corner sections.

It is also possible the peripheral board in plan to be in the form of a flat ring, wherein the peripheral board is completely covered with double-sided adhesive tape.

In one embodiment of the invention, on the inner side of the housing there are inward protruding elements for securing the device or its parts by fastening means.

In one embodiment of the invention, there is an additional through hole in one of the housing walls for additional construction details.

The protective casing thus described according to the invention is used in the production of water heaters.

Accordingly, a water heater is created, comprising a water tank with cold and hot water pipes mounted thereto, an outer jacket, polyurethane foam insulation between the water tank and the outer jacket, wherein in the cavity between the water tank and the outer jacket there is at least one additional device located in a protective casing according to the invention which is mounted to the inner surface of the outer jacket. The protective casing has an opening and a peripheral board resting tightly with its entire circumference on the inner surface of the outer jacket, around a technological opening in the outer jacket. Tight resting means that the protective casing is pressed against the inner surface of the outer jacket so that no gap is formed between them. The protective casing is mounted noninvasively to the jacket at least partially by means of double-sided adhesive tape.

Preferably, the mounting surface of the peripheral board of the protective casing is complementary to the inner surface of the outer jacket around the technological opening, to which inner surface, the protective casing is mounted.

In one embodiment of the invention, the device is an electronic device. Alternatively, it can be an electromechanical device.

It is possible that the electronic device is mounted by fastening means to protruding elements on the inner side of the housing of the protective casing, and additional construction details pass through an additional through hole in a wall of the protective casing.

In one embodiment of the invention, a display of the device, attached to the protective casing, is mounted to the technological opening of the outer jacket.

### Brief description of the drawings

The protective casing for device, object of the invention, is presented in more detail in the attached figures, where:
Figure 1 is a front view of the protective casing for device according to an embodiment of the invention.
Figure 2 is a front axonometric view of the protective casing for device according to an embodiment of the invention.
Figure 3 is a rear axonometric view of the protective casing for device according to an embodiment of the invention.
Figure 4 is another rear axonometric view of the protective casing for device according to an embodiment of the invention.
Figure 5 is a partial cross-sectional view of the protective casing for device according to an embodiment of the invention.
Figure 6 is a front view of the protective casing for device according to an embodiment of the invention, with four bushings for securing a device.
Figure 7 is a front view of the protective casing for device according to an embodiment of the invention, with two bushings for securing a device.
Figure 8 is a front view of the protective casing for device according to another embodiment of the invention, with two bushings for securing a device.
Figure 9 is a partial view of protective casing for device, mounted to a water heater jacket, according to a preferred embodiment of the invention.
Figure 10 is a partial view of protective casing for device, mounted to a water heater, according to a preferred embodiment of the invention.
Figure 11 is an axonometric view of the protective casing for device, mounted to water heater jacket, according to one embodiment of the invention.

### Exemplary embodiment and application of the invention

In the present description, the terms "'front", "rear", "bottom" and "top" refer to the arrangement of the water heater elements in its usual operating position.

The protective casing for device according to the invention is used to cover and protect various devices that are mounted to water-containing systems, such as water heaters. Such devices are, for example, a circuit board, interface panel, thermostat, thermal indicator, lamp, controller, or other element.

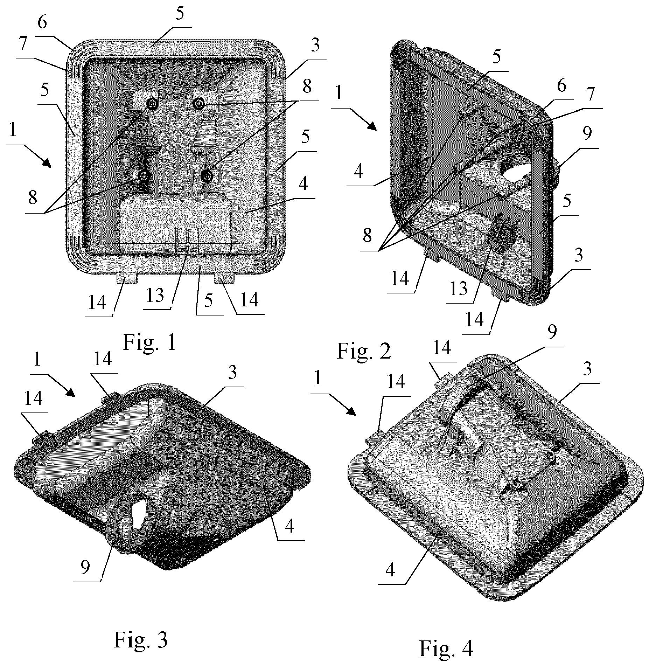

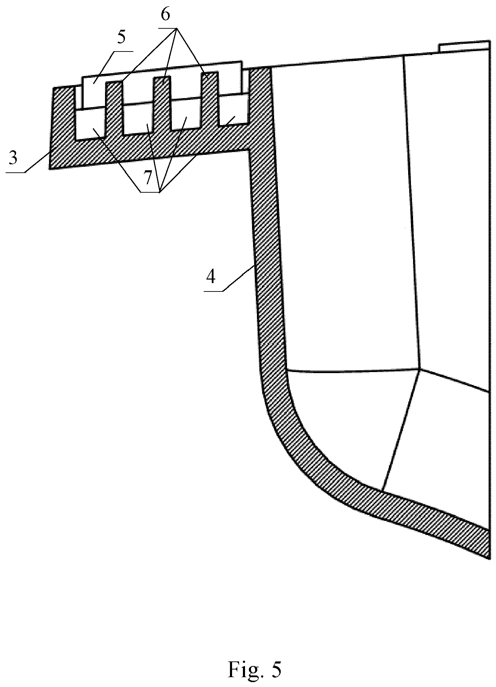

The protective casing for device comprises housing with a cavity formed inside it to accommodate the device 2 (not shown in the figures). The housing can have a different shape, for example, an irregular hexagon, with an opening on one side, surrounded by a peripheral board 3, which extends away from wall 4 of the housing located around the opening. The peripheral board 3 has a mounting side on which a double-sided adhesive tape 5 is located, as shown in figure 2. In the preferred embodiment shown in the figures, the peripheral board is a protruding away plate approximately perpendicular to the wall 4 of the housing and surrounding the housing opening from all sides. Said plate has a mounting side facing in the opposite direction to the cavity of the housing, which is designed to adhere to the inner surface of an outer jacket of water heater. The double-sided adhesive tape 5 serves to prevent the passage of polyurethane foam to the inner cavity of the protective casing during the foaming process of the water heater. In addition, the double-sided adhesive tape serves as a mounting element in the production of water heaters, as it is the means to mount the protective casing to the inner surface of the water heater jacket. The double-sided adhesive tape 5 can be located on the entire mounting surface of the peripheral board 3 or, alternatively, it can be located only in certain sections. In the second case, in the areas of the mounting side of the peripheral board, where there is no double-sided adhesive tape, alternating ribs 6 and grooves 7 are formed, which are parallel to the edge of the housing opening, as shown in Figures 1, 2 and 5.

The alternating ribs 6 and grooves 7 form a series of barriers to prevent the passage of polyurethane foam during the process of filling the water heater with polyurethane foam for insulation, in which the foam goes from liquid through creamy to solid form. As it goes through these phases, it increases in volume until it subsides and reaches the solid phase. Due to the alternating ribs 6 and grooves 7, if foam enters them, it can expand and subside without being able to pass all the ribs 6 and grooves 7 and to enter the inside of the casing. After passing the outermost rib, the foam enters the outermost groove and fills it, thus reducing its speed, and the amount of foam reaching the next rib and, respectively, the next groove is less. The number of ribs and grooves may vary, depending on the manufacturer's preferences. The more alternating ribs and grooves are used, the more obstacles are provided so that the polyurethane foam does not enter the cavity of the protective casing 1. For example, as shown in Figures 1 and 2, three ribs and three grooves can be formed and even if the polyurethane foam passes through the first outermost rib and the first groove, it can stop at the second rib or in the second groove, and if it passes them, it can stop at the third rib or in the third groove.

The double-sided adhesive tape can be made of XPS.

The surface of the mounting side of the peripheral board can be smooth or alternatively matte, as long as it is suitable for placing double-sided adhesive tape on it. Polishing the surface increases the possibility of good adhesion with the double-sided adhesive tape.

The peripheral board 3 in plan can have different shapes. For example, it can be in the form of a simple polygon, with alternating ribs 6 and grooves 7 located in the corner sections and the double-sided adhesive tape is located between them in the straight sections of the peripheral board. In particular, as shown in the figures, the peripheral board 3 in plan can be in the form of a convex quadrangle with rounded corners, wherein the sections with alternating ribs 6 and grooves 7 are located in the rounded corner sections of the peripheral board 3 and double-sided adhesive tapes 5 are located in the straight sections between them.

Alternatively, the peripheral board 3 in plan can be in the form of a flat ring, wherein the peripheral board 3 is covered completely with double-sided adhesive tape 5.

Alternatively, it is possible that the corners of the peripheral board 3 are not rounded but right angles, but rounded ones are preferable, because rounded ones achieve a barrier of ribs 6, which is not interrupted by edges that can be a weak spot in the seal due to poor adhesion to the jacket. Often the edges of plastic products can be stress concentrators after injection molding of the detail which leads to its deformation. Also, the edges can make it difficult to fill the detail during the injection molding and these places of the detail are unfilled/unmolded and crooked.

The protective casing is preferably made of a polymeric material, such as plastic, but can alternatively be made of a metal, such as aluminum, or wood, as long as it can withstand the force of the polyurethane foam and does not crush during its swelling (expansion).

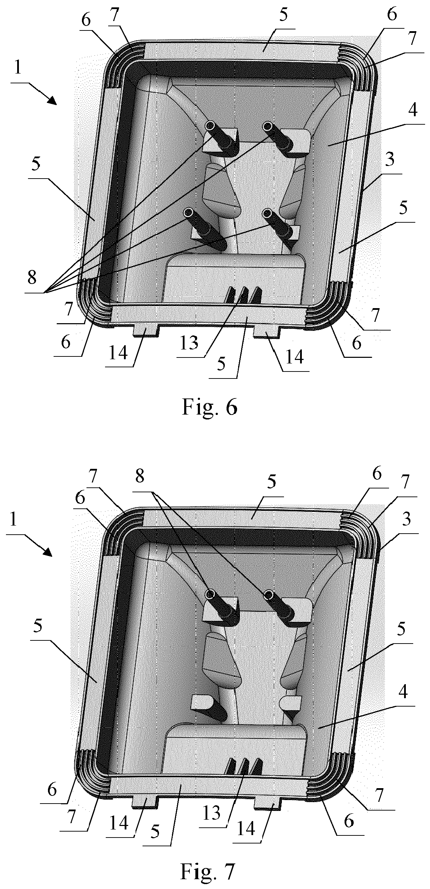

On the inside of the housing, there can be protruding inward elements 8 for securing a device or parts thereof by means of fasteners, as shown in Figures 1 and 2. For example, such elements can be bushings, grooves, clamps, threaded holes or others. The number of elements 8 for securing a device can differ according to the needs of the manufacturer and the type of device 2 to be housed in the protective casing 1. For example, as shown in Figures 1, 2, 6, 7 and 8, it is possible to use two or four bushings in which self-tapping screws for plastic are screwed and they provide a strong assembly with device 2, which is secured in the casing 1. Alternatively, it is possible the joints, to which the device 2 is connected, to be made so that there is no need for fasteners, and to rely on the tightness between the details, or on the use of mounting clips, molded in the plastic of the protective casing 1. The protective casing can also have a fixing slot 13 (Fig. 1, 2, 6, 7 and 8) for additional fixing of the device in it.

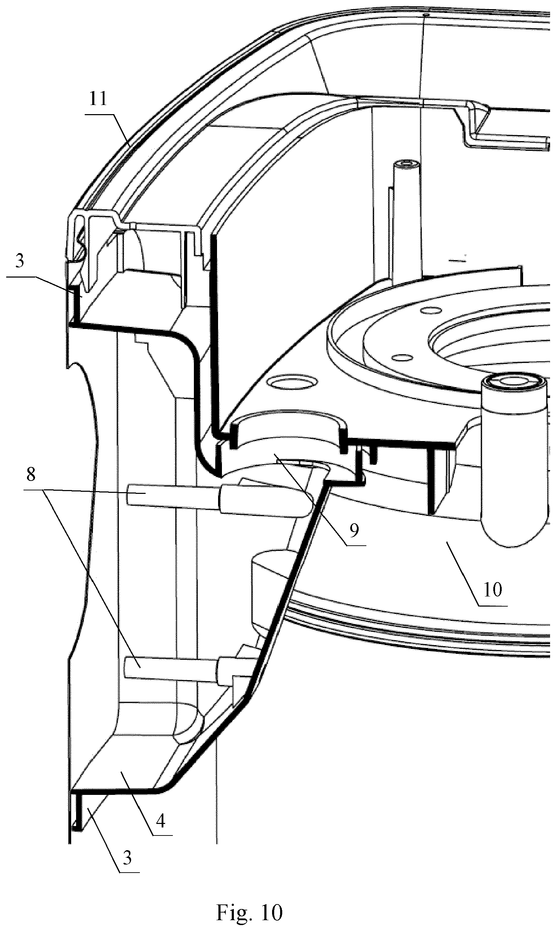

As shown in Figures 3, 4 and 10, in one of the walls of the housing an additional through hole 9 can be formed for unimpeded passage of additional construction details from the inside of the casing to the area where the flanges, heaters and power supply board of the water heater are located. This additional through hole 9 is preferably placed tightly to the through hole of the flange, and it is possible to place foam rubber in the area of this hole, usually round washers or tape, which is glued around the cover opening before mounting to the water heater, which foam rubber reinforces the sealing. In case there are gaps between the through hole of the flange and the additional through hole 9, the foam rubber is crushed and it fills these gaps, so that the foam cannot pass. The purpose of the seal is to prevent the passage of polyurethane foam to the inside of the casing or to the area where the flanges, heaters, thermal switches, electrical wires and power supply board of the water heater are located. Such additional construction details can be, for example, cables for the device or thermal sensors.

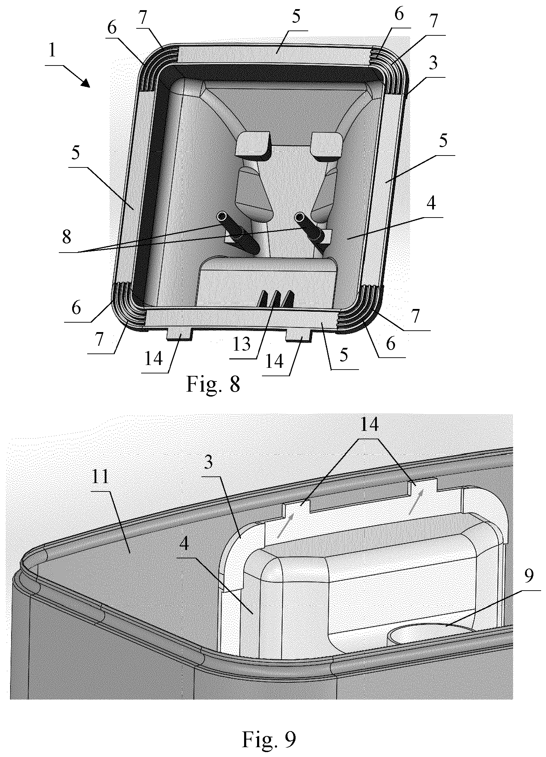

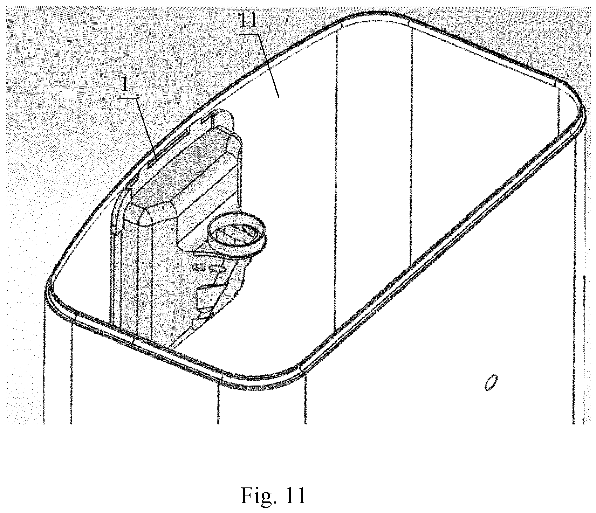

The protective casing 1 can have spacers 14 (Fig. 1, 2, 3, 4, 6, 7, 8, 9, 11) to prevent displacement of the casing in case the swelling force of the foam is greater than the fixing force of the double-sided adhesive tape. Thus, the spacers 14, as shown in Figures 9 and 11, on one of the side walls of the peripheral board, during mounting rest on the lower edge of the jacket and prevent significant displacement of the casing in vertical direction.

The protective casing 1 for device 2 according to the invention is part of a water heater which comprise other conventional water heater elements, such as water tank 10 with cold and hot water pipes mounted thereto, outer jacket 11, polyurethane foam insulation between the water tank 10 and the outer jacket 11. In the cavity between the water tank 10 and the outer jacket 11 there is at least one additional device located in the protective casing 1 which is mounted to the inner surface of the outer jacket 11. The protective casing 1 has an opening and a peripheral board 3 resting tightly with its entire circumference on the inner surface of the outer jacket 11, around a technological opening 12 in the outer jacket 11 (Fig. 11). Resting tightly means that the protective casing 1 is pressed against the inner surface of the outer jacket 11 so that no gap is formed between them.

The protective casing 1 is non-invasively mounted to the jacket 11 and is secured at least partly by double-sided adhesive tape 5. Preferably, the mounting surface of the peripheral board 3 of the protective casing 1 is complementary to the inner surface of the outer jacket 11 around the technological opening 12, to which inner surface the protective casing 1 is mounted. Thus, for example, the top and bottom sides of the peripheral board are in the form of arcs of a circle, when the jacket of the water heater is cylindrical.

When mounting the protective casing to the jacket of the water heater, the casing must be oriented in a specific place. For this purpose, a mandrel is used, which is placed on the inner side of the casing. Thus assembled, the inner casing and the mandrel are brought to the jacket of the water heater until the mandrel passes through the technological opening of the jacket, followed by subsequent gluing of the casing to the jacket, and removing of the mandrel. The water heater can then be completed and foamed. After the foaming process is finished, other components are added to the water heater for its final completion, such as flanges, heaters, protectors, thermal switches, power boards, cord and electrical installation, and others, which components are closed under the water heater cover. At the stage of placing these components, the respective parts of the device are attached to the elements 8 for securing the device in the inner casing by fastening means. It is possible part of the device that is secured in the protective casing 1 to remain outside the jacket 11 of the water heater, for example when mounting a control board, the board is mounted in the protective casing 1, and its control panel or display mounted in the technological opening 12 of the jacket 11 remains in front of the jacket 11. The display passes through the technological opening 12 of the jacket 11, and it is possible part of it to rest on the jacket, and to be fastened with self-tapping screws to the protective casing 1.

The reference numbers of the technical features are included in the claims in order to increase the comprehensibility of the claims and, therefore, these reference numbers do not have any limiting effect on the interpretation of the elements indicated by these reference numbers.

## Claims

1. Protective casing for device comprising a housing with a cavity formed inside it for accommodating the device (2), which housing has on one of its sides an opening surrounded by a continuous peripheral board (3), extending away from a wall (4) of the housing located around the opening, **characterized in that** the peripheral board (3) has a mounting side on which a double-sided adhesive tape (5) is at least partially located.

2. Protective casing for device according to claim 1, **characterized in that** the surface of the mounting side of the peripheral board (3) is smooth.

3. Protective casing for device according to claims 1 and 2, **characterized in that** alternating ribs (6) and grooves (7), located parallel to the edge of the housing opening, are formed in the areas of the mounting side of the peripheral board (3) where there is no double-sided adhesive tape (5).

4. Protective casing for device according to claim 3, **characterized in that** the peripheral board (3) in plan is in the form of a simple polygon, with alternating ribs (6) and grooves (7) located in the corner sections, wherein in the straight sections between the corner sections of the peripheral board (3) is located the double-sided adhesive tape (5).

5. Protective casing for device according to claim 4, **characterized in that** the peripheral board (3) in plan is in the form of a convex quadrangle with rounded corners, wherein the sections with alternating ribs (6) and grooves (7) are located in the rounded corner sections of the peripheral board (3), and the double-sided adhesive tapes (5) are located in the straight sections between the corner sections.

6. Protective casing for device according to claims 1 and 2, **characterized in that** the peripheral board (3) in plan is in the form of a flat ring, wherein the peripheral board (3) is completely covered with double-sided adhesive tape (5).

7. Protective casing for device according to any of the preceding claims, **characterized in that** there are protruding inward elements (8) for securing the device or its parts by fastening means on the inner side of the housing.

8. Protective casing for device according to any of the preceding claims, **characterized in that** there is an additional through hole (9) in one of the housing walls for additional construction details.

9. Water heater comprising a water tank (10) with cold and hot water pipes mounted thereto, an outer jacket (11) and polyurethane foam insulation between the water tank (10) and the outer jacket (11), wherein in the cavity between the water tank (10) and the outer jacket (11) there is at least one additional device (2) located in a protective casing (1) mounted to the inner surface of the outer jacket (11), wherein the protective casing (1) has an opening and a peripheral board (3) resting tightly with its entire circumference on the inner surface of the outer jacket (11), around a technological opening (12) in the outer jacket (11), **characterized in that** the protective casing (1) is according to any of the claims 1 to 8 and is mounted noninvasively to the jacket (11) at least partially by means of double-sided adhesive tape (5).

10. Water heater according to claim 9, **characterized in that** the mounting surface of the peripheral board (3) of the protective casing (1) is complementary to the inner surface of the outer jacket (11) around the technological opening (12), to which inner surface of the outer jacket (11), the protective casing (1) is mounted.

11. Water heater according to claims 9 or 10, **characterized in that** the device (2) is electronic device or electromechanical device.

12. Water heater according to any of claims 9 to 11, **characterized in that** the electronic device is mounted by fastening means to protruding elements (8) on the inner side of the housing of the protective casing (1), and additional construction details are passed through an additional through hole (9) in a wall of the protective casing (1).

13. Water heater according to any of claims 9 to 12, **characterized in that** a display or panel of the device (2), attached to the protective casing (1), is mounted to the technological opening (12) of the outer jacket (11).
